# EUROPEAN PATENT APPLICATION

(11) **EP 4 429 358 A1**
(43) Date of publication of application: **11.09.2024**
(21) Application number: 22889188.3
(22) Date of filing: 28.10.2022
(51) Int. Cl.: H04W 72/04, H04B 7/06, H04W 24/10

(54) **ELECTRONIC DEVICE AND METHOD FOR WIRELESS COMMUNICATION, AND COMPUTER-READABLE STORAGE MEDIUM**

(30) Priority: 04.11.2021 CN 202111298774
(71) Applicant: Sony Group Corporation, Tokyo 108-0075 (JP)
(72) Inventor: HE, Qingqing, Beijing 100876 (CN); LIU, Fangxin, Beijing 100876 (CN); LI, Haojin, Beijing 100027 (CN); ZHANG, Xuefei, Beijing 100876 (CN)
(74) Representative: D Young & Co LLP
(86) International application number: PCT/CN2022/128097
(87) International publication number: WO 2023/078163

(57) **Abstract**

The present disclosure provides an electronic device and method for wireless communication, and a computer-readable storage medium. The electronic device comprises a processing circuit, which is configured to: set a timer, wherein the timer is used for counting the time from a point when a user equipment accesses a first cell of a non-terrestrial network, and the timing duration of the timer is set on the basis of a predicted service duration of the first cell to the user equipment; and reduce the number of beam measurement result reporting times when the timer does not expire compared to beam measurement result reporting after the timer expires.

## Description

This application claims priority to Chinese Patent Application No. 202111298774.3 titled "ELECTRONIC DEVICE AND METHOD FOR WIRELESS COMMUNICATION, AND COMPUTER-READABLE STORAGE MEDIUM", filed on November 4, 2021 with the China National Intellectual Property Administration (CNIPA), which is incorporated herein by reference in its entirety.

### FIELD

The present disclosure relates to the technical field of wireless communications, and particularly to a technique for energy-saving of user equipment in non-terrestrial network communications. More specifically, the present disclosure relates to an electronic device and a method for wireless communications and computer-readable storage medium.

### BACKGROUND

In a 5G Non-Terrestrial Network (NTN), a satellite has characteristics of a high position, a large beam coverage, and a high operation speed of non-geostationary orbit satellites. These characteristics results in a large transmission delay, a great radius of cell coverage, mobility of a cell and other technical challenges to the 5G non-terrestrial network.

For an NTN low earth orbit (LEO), a round trip time (RTT) between a terminal and the satellite is approximately 270.73ms. For an NTN Geostationary Earth Orbiting (GEO), an RTT between a terminal and a satellite is approximately 12.89ms. In contrast, in a terrestrial network in which a distance between an NR base station (gNB) and a terminal is 10km as an example, an RTT between the terminal and the base station is only 0.066ms.

In the NTN, the satellite forms multiple beams on the earth, each of the beams covers a certain area on the earth, and a radius of a coverage of the beam may be hundreds to thousands of kilometers.

A speed of a low-orbit satellite is about 7.56km/s, and the movement speed of user equipment (UE) is negligible compared with the low-orbit satellite. As the LEO satellite moves, the beams actually move over time. This means that a serving beam of the UE changes over time as the UE receives a signal from the satellite.

Due to the large transmission delay of the NTN, the UE has a lot of signaling interactions with the gNB when performing cell switching. The frequent cell switching results in huge energy consumption. Therefore, it is desired to propose a technology to reduce the energy consumption of the UE.

### SUMMARY

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

According to an aspect of the present disclosure, an electronic apparatus for wireless communications is provided. The electronic apparatus includes processing circuitry configured to: set a timer, which is used for timing a time period since user equipment accesses into a first cell of a Non-Terrestrial Network (NTN), and a timing duration of which is set based on a pre-estimated service time duration of the first cell for the user equipment; and reduce the number of times of reporting beam measurements results during a period when the timer does not elapse, compared with reporting of the beam measurement results performed after the timer elapses.

According to another aspect of the present disclosure, a method for wireless communications is provided. The method includes: setting a timer, which is used for timing a time period since user equipment accesses into a first cell of a Non-Terrestrial Network (NTN), and a timing duration of which is set based on a pre-estimated service time duration of the first cell for the user equipment; and reducing the number of times of reporting beam measurement results during a period when the timer does not elapse, compared with reporting of the beam measurement results performed after the timer elapses.

According to an aspect of the present disclosure, an electronic apparatus for wireless communications is provided. The electronic apparatus includes processing circuitry configured to: determine, based on a pre-estimated service time duration of a first cell of a Non-Terrestrial Network (NTN) into which user equipment is to access for the user equipment, a timing duration of a timer for the user equipment; and provide information of the timing duration to the user equipment, so that the user equipment uses the timer for timing a time period since the user equipment accesses into the first cell, where the user equipment reduces the number of times of reporting beam measurement results during a period when the timer does not elapse, compared with reporting of the beam measurement results performed after the timer elapses.

According to another aspect of the present disclosure, a method for wireless communications is provided. The method includes: determining, based on a pre-estimated service time duration of a first cell of a Non-Terrestrial Network (NTN) into which user equipment is to access for the user equipment, a timing duration of a timer for the user equipment; and providing information of the timing duration to the user equipment, so that the user equipment uses the timer for timing a time period since the user equipment accesses into the first cell, where the user equipment reduces the number of times of reporting beam measurement results during a period when the timer does not elapse, compared with reporting of the beam measurement results performed after the timer elapses.

According to other aspects of the present disclosure, computer program codes and a computer program product for implementing the above-described method for wireless communications and computer-readable storage medium having the computer program codes for implementing the method for wireless communications stored thereon are further provided.

With the electronic apparatus and method according to embodiments of the present disclosure, reporting of measurement results during a relatively stable service period after accessing into a cell is reduced, so that a signaling overhead is reduced and thereby energy consumption of UE is reduced.

These and other advantages of the present disclosure will be more apparent from the following detailed description of preferred embodiments of the present disclosure in conjunction with the accompanying drawings.

### BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:
Figure 1 is a block diagram illustrating functional modules of an electronic apparatus for wireless communications according to an embodiment of the present disclosure;
Figure 2 shows an example of a scenario of an NTN network;
Figure 3 shows another example of a scenario of an NTN network;
Figure 4 is a block diagram illustrating functional modules of an electronic apparatus for wireless communications according to an embodiment of the present disclosure;
Figure 5 shows an example of selection of a target cell;
Figure 6 shows a schematic diagram of UE approaching an edge of a cell corresponding to beam 5 when a timer elapses;
Figure 7 shows a schematic diagram of UE approaching an edge of cell 5 when a timer elapses;
Figure 8 shows a schematic diagram of a signaling process of a cell switching operation according to an embodiment of the present disclosure;
Figure 9 shows a schematic diagram of an information procedure of beam measurements and reporting of beam measurement results after UE switches to a target cell;
Figure 10 is a block diagram illustrating functional modules of an electronic apparatus for wireless communications according to another embodiment of the present disclosure;
Figure 11 shows a flow chart of a method for wireless communications according to an embodiment of the present disclosure;
Figure 12 shows a flow chart of a method for wireless communications according to an embodiment of the present disclosure;
Figure 13 is a block diagram showing a first example of a schematic configuration of an eNB or gNB to which the technology of the present disclosure may be applied;
Figure 14 is a block diagram showing a second example of a schematic configuration of an eNB or gNB to which the technology of the present disclosure may be applied;
Figure 15 is a block diagram showing an example of a schematic configuration of a smartphone to which the technology of the present disclosure may be applied;
Figure 16 is a block diagram showing an example of a schematic configuration of a car navigation apparatus to which the technology of the present disclosure may be applied; and
Figure 17 is a block diagram of an exemplary block diagram illustrating the structure of a general purpose personal computer capable of realizing the method and/or device and/or system according to the embodiments of the present disclosure.

### DETAILED DESCRIPTION

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a service, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

### <First Embodiment>

As mentioned above, there is a large transmission delay for the NTN, and thus a lot of signaling interactions with a gNB occurs when UE performs cell handover or when the UE performs an operation related to cell handover, resulting in great energy consumption. Since a movement speed of the UE is almost negligible compared with that of a satellite and movement of the satellite is regular, some reporting of measurements by the UE may be reduced accordingly, so as to reduce the energy consumption. This embodiment provides an electronic apparatus 100 for reducing energy consumption of UE.

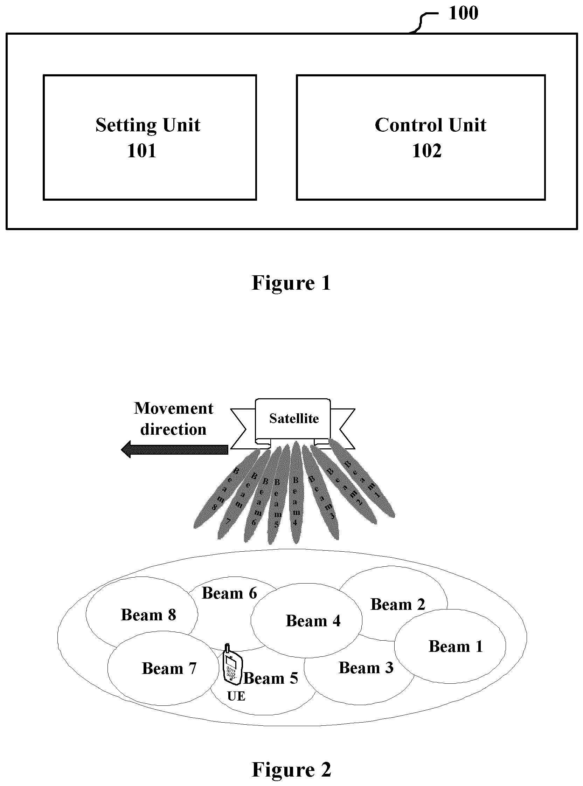

Figure 1 shows a block diagram of functional modules of an electronic apparatus 100. The electronic apparatus 100 includes a setting unit 101 and a control unit 102. The setting unit 101 is configured to set a timer, which is used for timing a time period since UE accesses into a first cell of an NTN, and a timing duration of which is set based on a pre-estimated service time duration of the first cell for the UE. The control unit 102 is configured to reduce the number of times of reporting beam measurement results during a period when the timer does not elapse, compared with reporting of the beam measurement results performed after the timer elapses.

The setting unit 101 and the control unit 102 may be implemented by one or more processing circuitries. The processing circuitry may be implemented as a chip or a processor, for example. Further, it should be understood that various functional units in the electronic apparatus shown in Figure 1 are only logical modules determined based on specific functions thereof, and are not for limiting a specific implementation.

The electronic apparatus 100 may, for example, be provided on UE side or be communicatively connected to the UE. Here, it should be further noted that the electronic apparatus 100 may be implemented at a chip level or at a device level. For example, the electronic apparatus 100 may operate as the UE itself and may further include a memory, a transceiver (not shown), and other external devices. The memory may be used to store programs that the user equipment needs to execute and related data information to achieve various functions. The transceiver may include one or more communication interfaces to support communications with different devices (such as a base station, other UE, and the like). An implementation of the transceiver is not specifically limited here.

It should be further noted that in this specification, terms such as first, second and the like are only for a purpose of distinguishing and do not represent any order or other meaning.

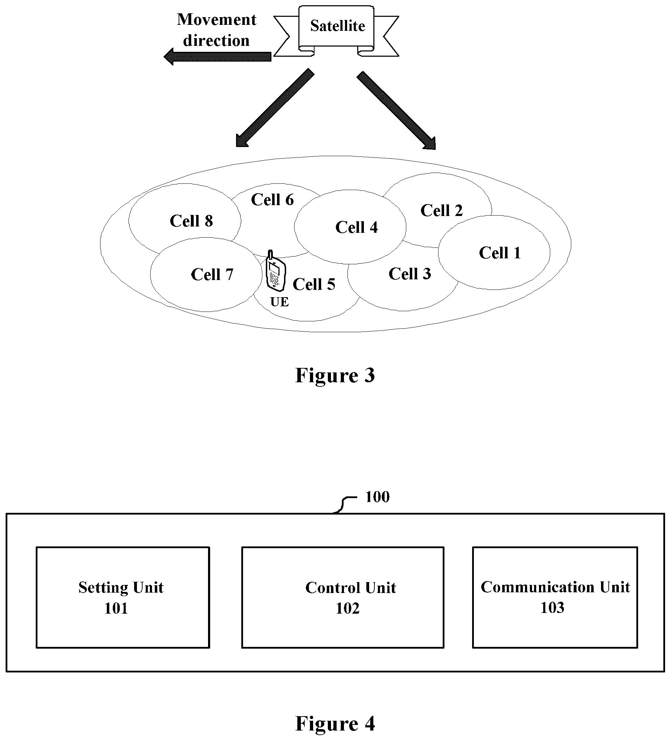

For ease of understanding, each of Figure 2 and Figure 3 shows an example of a scenario of an NTN network. In Figure 2, one beam corresponds to (is mapped to) one cell. In Figure 3, multiple beams correspond to (are mapped to) one cell. The solution of this embodiment is applicable to both scenarios.

Under a general circumstance, a movement speed of the UE is negligible compared to the satellite, and a movement direction and movement speed of the satellite follow a predetermined rule. In example of Figure 2 and Figure 3, the satellite moves to the left. Therefore, Starting from the UE in the Figure accessing into a first cell (for example, represented as beam 5 in Figure 2 and cell 5 in Figure 3), as time elapses, a relative position of the UE in the first cell changes until the UE leaves a coverage of the first cell and the first cell can no longer serve the UE.

During the period in which the UE is within the coverage of the first cell, a communication quality is likely to meet a requirement of the UE. Therefore, it is not necessary for the UE to frequently measure the beam and/or report beam measurement results to a base station. Correspondingly, during this period, the control unit 102 may reduce the number of times of reporting the beam measurement results. In addition, the control unit 102 may further reduce the number of times of beam measurements.

In this embodiment, the timer is for timing the above mentioned time period. An approximate location of the UE may be estimated with the timer, so that the control unit 102 can recover the number of times of beam measurements and/or the number of times of reporting beam measurement results as the UE moves out of the coverage of the first cell. Thereby, a cell handover operation is performed reliably.

Therefore, a timing duration of the timer may be set based on a pre-estimated service time duration of the first cell for the UE. The pre-estimated service time duration may be determined by the base station based on location information of the UE, satellite ephemeris information, a satellite movement direction and speed, a beam elevation, and a cell coverage area. As an example, information of the timing duration of the timer may be acquired from the base station. Correspondingly, as shown in Figure 4, the electronic apparatus 100 may further include a communication unit 103 configured to receive a radio resource control reconfiguration (RRC Reconfiguration) message from the base station, where the RRC Reconfiguration message includes the information of the timing duration of the timer. The base station here is a base station corresponding to a serving cell where the UE is located before handing over to the first cell. The setting unit 101 deactivates the timer in a case that the RRC Reconfiguration message does not include the information of the timing duration of the timer, for example, a corresponding field is null. In other words, the UE performs normal beam measurements and reporting operations.

The control unit 102 reduces the number of times of reporting beam measurement results during a period when the timer does not elapse, compared with reporting of the beam measurement results performed after the timer elapses. For example, the control unit 102 may not perform reporting of the beam measurement results when the timer does not elapse. In addition, the control unit 102 may reduce the number of times of beam measurements during a period when the timer does not elapse, compared with the beam measurements performed after the timer elapses. Of course, the control unit 102 may not perform the beam measurements during the period when the timer does not elapse, in order to reduce the energy consumption as much as possible.

On the other hand, during the period when the timer does not elapse, the control unit 102 may measure merely one or more beams corresponding to the serving cell, that is, the first cell. In an example as in Figure 2, the UE may measure only beam 5 during the period when the timer does not elapse. In an example as in Figure 3, the UE may measure only the multiple beams corresponding to cell 5 during the period when the timer does not elapse. This is because the UE does not need to perform cell handover during the period when the timer does not elapse, and therefore it is not necessary to measure all beams, but only necessary to monitor a beam quality of the current serving cell.

During the period when the timer does not elapse, the control unit 102 interrupts timing of the timer and triggers a cell handover process in a case that the measured beam quality of the first cell is lower than a predetermined threshold, for example, the beam quality cannot meet a requirement of the UE. For example, the UE measures all the beams and reports the beam measurement results to the base station, and the base station performs cell handover based on the beam measurement results.

In addition, the control unit 102 also performs the cell handover operation after the timer elapses. In order to hand over to a cell having a better communication quality, the UE needs to perform beam measurements and report beam measurement results to the base station.

As an example, the UE determines its own location after the timer elapses, and the communication unit 103 may further include the location information of the UE in a beam measurement report to provide to the base station. Correspondingly, the base station may estimate, based on the location information of the UE, satellite ephemeris information, a satellite movement direction and speed, a beam elevation, and a cell coverage area, a pre-estimated service time duration in which a corresponding cell serve the UE. For example, in a case of determining a target cell that the UE is to hand over to, the base station may select, from among candidate cells for which the UE performs the beam measurements, a cell which enables the UE to work normally and provides a longest pre-estimated service time duration. Then, the base station instructs the selected target cell to the UE. The control unit 102 may hand over to the target cell based on the instruction from the base station.

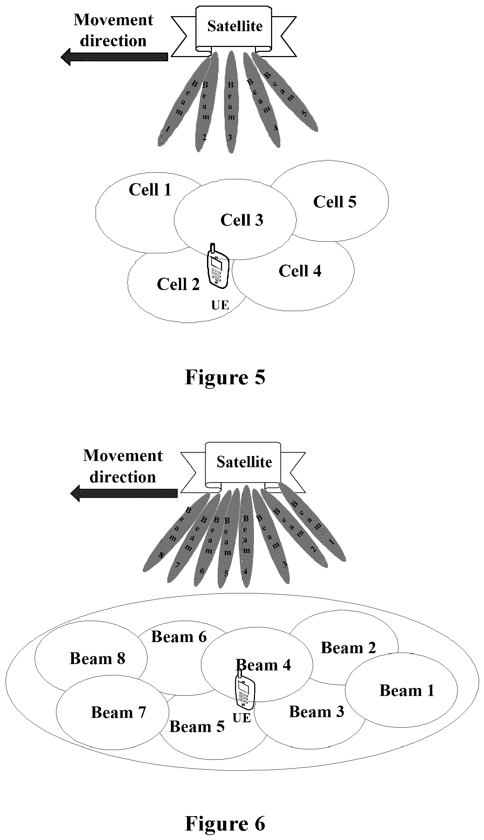

Figure 5 shows an example of selection of a target cell. Here, it is determined through a measurement that cell 3 and cell 4 both has a communication quality satisfying a condition for a normal operation of the UE. From calculation of the base station, a pre-estimated service time duration of cell 3 for the UE is less than a pre-estimated service time duration of cell 4 for the UE. Therefore, in cell handover, the base station selects cell 4 as the target cell and instructs the UE to hand over to cell 4.

In this way, by preferentially handing over to a cell having a longer service time duration, frequent cell handover of the UE can be reduced, and thereby energy consumption of the UE is reduced.

In addition, in order to further reduce the energy consumption of the UE, the control unit 102 may be further configured not to perform a measurement on a beam corresponding to a cell which the user equipment already passed through when performing the cell handover operation. This is because the satellite movement direction and speed, the satellite ephemeris information, and the location information of the UE when performing the cell handover are all known, and thereby a cell whose coverage area passes through the UE (or a cell whose coverage area is passed through by the UE) can be determined. Such cell which passes through the UE is not to serve the UE immediately in the future, and therefore the UE does not need to measure a beam thereof. Thereby, the power consumption caused by measurements and reporting is reduced.

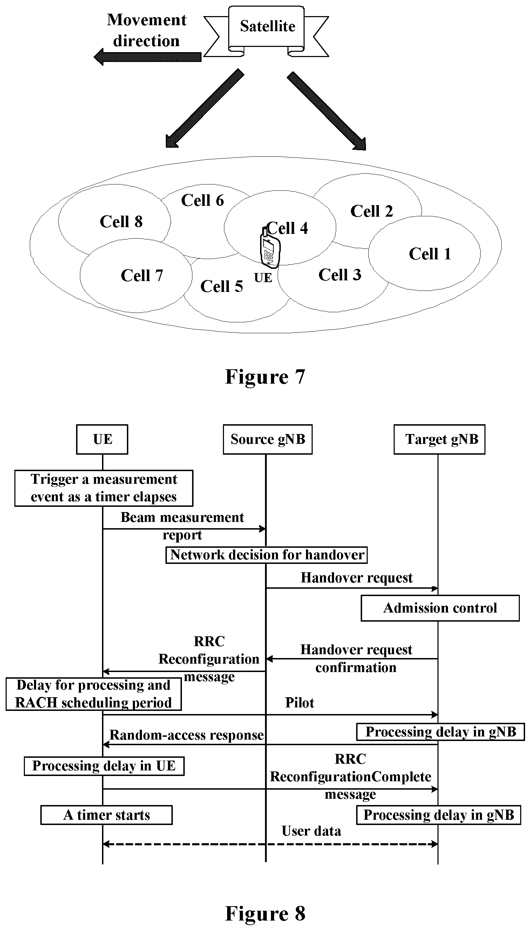

Reference is made further to the example as in Figure 2, where one beam is mapped to one cell. Figure 6 shows a schematic diagram of UE approaching an edge of a cell corresponding to beam 5 when a timer elapses. In this case, the UE performs a cell handover operation. Based on a movement direction of the satellite, the UE passes through a cell corresponding to beam 7 and a cell corresponding to beam 8, and these two cells will no longer serve the UE. Therefore, the UE may not perform measurements on beam 7 and beam 8 when performing the cell handover operation. Similarly, reference is made further to the example as in Figure 3, where one beam is mapped to one cell. Figure 7 shows a schematic diagram of UE approaching an edge of cell 5 when a timer elapses. Based on a movement direction of the satellite, the UE passes through cell 7 and cell 8, and these two cells will no longer serve the UE. Therefore, the UE may not perform measurements on beams corresponding to cell 7 and cell 8 when performing the cell handover operation.

As mentioned above, when the cell handover is performed, the communication unit 103 may further acquire information of the timing duration of the timer via the RRC Reconfiguration message. Here, the timing duration of the timer may be a pre-estimated service time duration of a target cell to which the UE is to hand over to, or may be calculated based on the pre-estimated service time duration, for example, with a certain margin considered. After the cell handover, the timer is started and the UE reduces the number of times of beam measurements and/or the number of times of reporting the beam measurements.

For ease of understanding, Figure 8 shows a schematic diagram of a signaling process of a cell handover operation according to an embodiment of the present disclosure. It should be noted that this signaling process is exemplary rather than restrictive.

It is assumed that the UE is in cell 5 corresponding to the beam in the scenario as shown in Figure 2. As time goes by, the timer elapses and a measurement event for a cell handover operation is triggered. After measuring all beams or specific beams (for example, excluding beam(s) corresponding to a cell which is passed through), the UE transmits a measurement report to a source gNB (which is a current serving cell, that is, a base station corresponding to cell 5). The measurement report may include location information of the UE. The source gNB makes a decision based on the received measurement report and a pre-estimated service time duration of respective cells to determine a target cell that the UE is to hand over to. Here, the source gNB may determine a pre-estimated service time duration of a cell based on the location information of the UE, satellite ephemeris information, a satellite movement direction and speed, a beam elevation, a cell coverage area, and the like. In addition, the source gNB may determine, from among candidate cells which are measured, a cell which enables the UE to operate normally and provides the longest pre-estimated service time duration as the target cell. Then, the source gNB transmits a handover request to a gNB of the determined target cell (target gNB). The target gNB performs admission control and transmits a handover request confirmation to the source gNB. The source gNB transmits an RRC Reconfiguration message to the UE, which includes information of the timing duration of the timer. For example, the timing duration of the timer may be a pre-estimated service time duration of the target cell. Next, the UE performs a random-access process to the target gNB. Specifically, the UE transmits a pilot to the target gNB, receives a random-access response from the target gNB, and transmits an RRC ReconfigurationComplete message to the gNB. In addition, the UE starts a timer for timing a time period since the UE accesses into the target cell. It should be noted that although starting of the timer is performed after the RRC ReconfigurationComplete message is transmitted in Figure 8, this is not limiting. For example, the timer may be started immediately after the RRC Reconfiguration message is received.

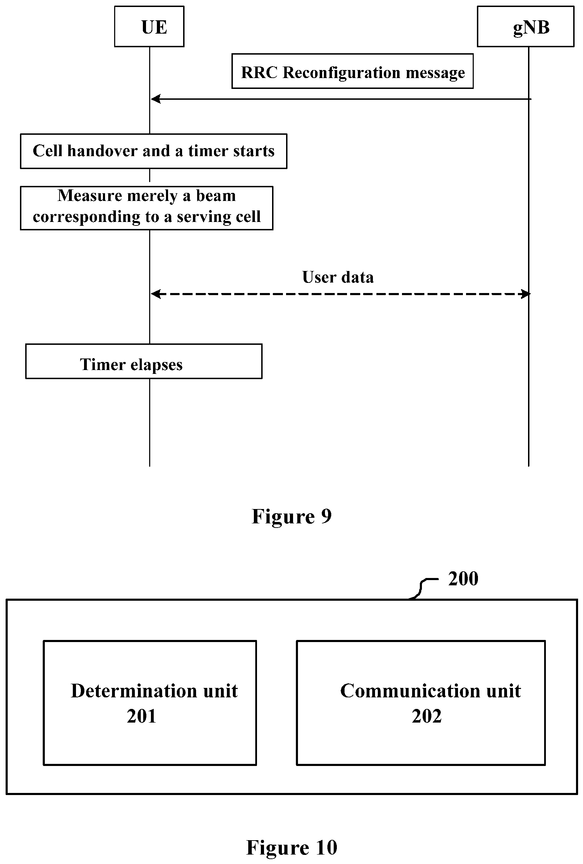

Figure 9 shows a schematic diagram of an information procedure of beam measurements and reporting of beam measurement results after UE hands over to a target cell. In Figure 9, repeated portions as those in Figure 8 are not shown and described in detail again. In Figure 9, after the cell handover is completed and the timer is started, the UE may measure only a beam corresponding to the current serving cell. Optionally, during the period when the timer does not elapse, the UE may not report the measurement results to the gNB, or reduce the number of times of reporting compared to that in a normal circumstance. In addition, the UE may reduce the number of times of the measurements or even not perform beam measurements. After the timer in Figure 9 elapses, the cell handover process in Figure 8 is repeated, which is not described here.

In summary, with the electronic apparatus 100 according to embodiment of the present disclosure, the beam measurements and/or reporting of the beam measurement results during a relatively stable service period after accessing a cell is reduced, so that the signaling overhead is reduced and thereby the energy consumption of the UE is reduced. In addition, with the electronic apparatus 100 according to the embodiment, the UE is enabled to preferentially access into a cell having a long service time duration, so that frequent cell handover is avoided and thereby the energy consumption of the UE is further reduced.

### <Second Embodiment>

Figure 10 is a block diagram illustrating functional modules of an electronic apparatus 200 for wireless communications according to another embodiment of the present disclosure. The electronic apparatus 200 includes a determination unit 201 and a communication unit 202. The determination unit 201 is configured to determine, based on a pre-estimated service time duration of a first cell of an NTN network into which UE is to access for the UE, a timing duration of a timer for the UE. The communication unit 202 is configured to provide information of the timing duration to the UE, so that the UE uses the timer for timing a time period since the user equipment accesses into the first cell, where the UE reduces the number of times of reporting beam measurement results during a period when the timer does not elapse, compared with reporting of the beam measurement results performed after the timer elapses.

The determination unit 201 and the communication unit 202 may be implemented by one or more processing circuitries. The processing circuitry may be implemented as a chip or a processor, for example. It should be understood that various functional units in the electronic apparatus shown in Figure 10 are only logical modules determined based on specific functions thereof, and are not for limiting a specific implementation.

The electronic apparatus 200 may, for example, be provided on a base station side or be communicatively connected to the base station. The base station described in the specification may also be a transmit receiver point (TRP) or an access point (AP). Here, it should be further noted that the electronic apparatus 200 may be implemented at a chip level or at a device level. For example, the electronic apparatus 200 may operate as the base station itself and may further include a memory, a transceiver (not shown), and other external devices. The memory may store programs and related data information that the base station needs to execute to achieve various functions. The transceiver may include one or more communication interfaces to support communications with different devices (such as UE, another base station, and the like). An implementation of the transceiver is not specifically limited here.

The first cell here may be a target cell that the UE is to hand over to when performing cell handover. The timer is used for timing a time period since the UE accesses into the first cell. During a period when the timer does not elapse, in order to reduce energy consumption, the UE may reduce the number of times of reporting of beam measurement results or not perform reporting of the beam measurement results; the UE may reduce the number of times of beam measurements or not perform the beam measurements; and the UE may measure merely one or more beams corresponding to the first cell. When the timer elapses, for example, it is indicated that the UE has arrived at an edge of the first cell, and the UE triggers a cell handover operation to hand over to another cell. In this case, the UE performs a normal number of times of reporting the beam measurement results. Relevant operations and details are described in detail in the first embodiment and are not repeated here.

For example, the communication unit 202 may include information of the timing duration in an RRC Reconfiguration message to provide to the UE. In a case that the RRC Reconfiguration message does not include the information of the timing duration, the communication unit 202 instructs the UE to deactivate the timer. For example, in a case that a field indicating the timing duration in the RRC Reconfiguration message is null, it is indicated that the base station instructs the UE to deactivate the timer, that is, to perform normal beam measurements and/or reporting of beam measurement results after accessing into the first cell.

Before the determination unit 201 determines that the UE is to access into the first cell, for example, within a cell handover process, the UE needs to report the beam measurement results to the base station. In other words, the communication unit 202 is further configured to acquire, from the UE, the beam measurement results of the UE. The beam measurement results may include, for example, location information of the UE.

The determination unit 201 may determine a service time duration in which respective candidate cells can provide service for the user equipment, based on the location information of the UE, satellite ephemeris information, a satellite movement direction and speed, a beam elevation, and a cell coverage area. The determination unit 201 determines, based on the beam measurement results and the determined pre-estimated service time duration of respective candidate cells, that the user equipment is to switch to the first cell. In an example, the first cell is one of the candidate cells which enables the UE to work normally and provides a longest pre-estimated service time duration.

In addition, the determination unit 201 may be further configured to determine a cell that the UE already passed through based on a satellite movement direction, and configure the UE not to perform a measurement on a beam corresponding to the cell that the UE already passed through. In this way, the energy consumption of the UE can be reduced by reducing unnecessary measurements and reporting of measurement results.

The relevant information procedures may be referred to Figure 8 and Figure 9 and the related description in the first embodiment, which are not repeated here.

In summary, with the electronic apparatus 200 according to embodiment of the present disclosure, the beam measurements and/or reporting of the beam measurement results during a relatively stable service period after accessing a cell is reduced, so that the signaling overhead is reduced and thereby the energy consumption of the UE is reduced. In addition, with the electronic apparatus 200 according to the embodiment, the UE is enabled to preferentially access into a cell having a long service time duration, so that frequent cell handover is avoided and thereby the energy consumption of the UE is further reduced.

### <Third Embodiment>

In the above description of embodiments of the electronic apparatuses for wireless communications, it is apparent that some processing and methods are further disclosed. In the following, a summary of the methods are described without repeating details that are described above. However, it should be noted that although the methods are disclosed when describing the electronic apparatuses for wireless communications, the methods are unnecessary to adopt those components or to be performed by those components described above. For example, implementations of the electronic apparatuses for wireless communications may be partially or completely implemented by hardware and/or firmware. Methods for wireless communications to be discussed blow may be completely implemented by computer executable programs, although these methods may be implemented by the hardware and/or firmware for implementing the electronic apparatuses for wireless communications.

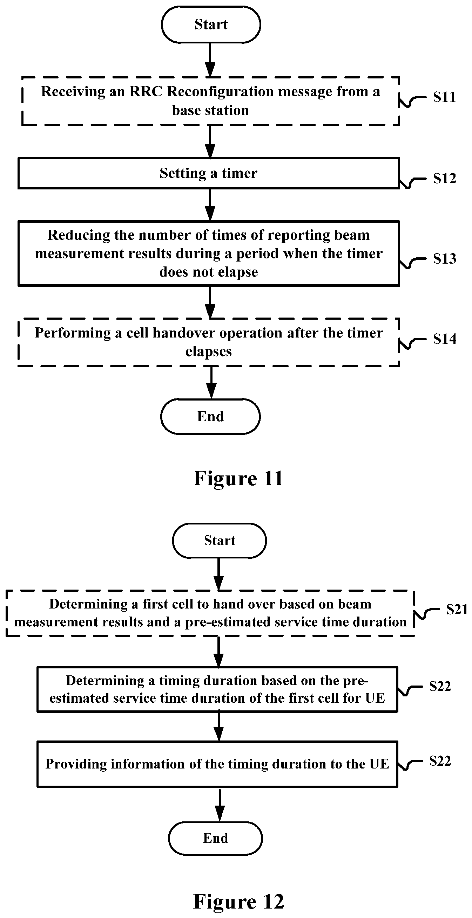

Figure 11 shows a flow chart of a method for wireless communications according to an embodiment of the present disclosure. The method includes: setting a timer (S12), which is used for timing a time period since UE accesses into a first cell of an NTN, and a timing duration of which is set based on a pre-estimated service time duration of the first cell for the UE; and reducing the number of times of reporting beam measurement results during a period when the timer does not elapse, compared with reporting of the beam measurement results performed after the timer elapses (S13). The method may be performed on the UE side, for example.

For example, in step S13, reporting of the beam measurement results may not be performed when the timer does not elapse. In addition, in step S13, the number of times of the beam measurements may be reduced during a period when the timer does not elapse, compared with the beam measurements performed after the timer elapses. On the other hand, during the period when the timer does not elapse, merely one or more beams corresponding to the first cell may be measured. For example, timing of the timer may be interrupted and a cell handover process may be triggered in a case that a measured beam quality of the first cell is lower than a predetermined threshold.

As shown in the dashed line block in Figure 11, the method may further include a step S11, in which an RRC Reconfiguration message is received from the base station, where the RRC Reconfiguration message includes information of the timing duration of the timer. The timer may be deactivated in a case that the RRC Reconfiguration message does not include the information of the timing duration of the timer.

As shown in another dashed line block in Figure 11, the method may further include a step S14, in which a cell handover operation is performed after the timer elapses. For example, location information of the UE may be included in the beam measurement report and provided to the base station of the first cell, so that the base station of the first cell determines a pre-estimated service time duration of respective candidate cells based on at least the location information of the UE, satellite ephemeris information, a satellite movement direction and speed, a beam elevation, and a cell coverage area. Furthermore, the base station of the first cell determines a target cell based on the beam measurement results of the UE and the determined pre-estimated service time duration of respective candidate cells. For example, the target cell is one of the candidate cells measured by the UE which enables the UE to operate normally and provides the longest pre-estimated service time duration. The UE hands over to the target cell based on an indication about the target cell from the base station of the first cell.

In an example, when performing the cell handover operation, measurements may not be performed on a beam corresponding to a cell which the user equipment already passed through, in order to further reduce the energy consumption of the UE.

Figure 12 is a flow chart of a method for wireless communications according to an embodiment of the present disclosure. The method includes: determining, based on a pre-estimated service time duration of a first cell of a Non-Terrestrial Network into which UE is to access for the UE, a timing duration of a timer for the UE (S22); and providing information of the timing duration to the UE (S23), so that the UE uses the timer for timing a time period since the UE accesses into the first cell, where the UE reduces the number of times of reporting beam measurement results during a period when the timer does not elapse, compared with reporting of the beam measurement results performed after the timer elapses. The method may be performed on a base station side, for example.

For example, information of the timing duration may be included in an RRC Reconfiguration message and provided to the UE. Further, the information of the timing duration may not be included in the RRC Reconfiguration message so as to instruct the UE to deactivate the timer.

As shown in the dashed line block in Figure 12, the method may further include a step S21, in which beam measurement results of the UE are acquired, and it is determined that the UE is to hand over to the first cell, based on the beam measurement results and determined pre-estimated service time duration of respective candidate cells. That is, in a cell handover process, the base station determines a target cell (i.e., the first cell) that the UE is to hand over to, not only based on the beam measurement results of the UE but also based on the pre-estimated service time duration of the candidate cells. In an example, the first cell is one of the candidate cells which enables the UE to work normally and provides the longest pre-estimated service time duration.

For example, the pre-estimated service time duration in which respective candidate cells can provide service for the UE may be determined based on location information of the UE, satellite ephemeris information, a satellite movement direction and speed, a beam elevation, and a cell coverage area. The location information of the UE may be acquired through a beam measurement report of the UE.

In addition, a cell that the UE already passed through may be determined based on a satellite movement direction, and the UE may be configured not to perform a measurement on a beam corresponding to the cell that the UE already passed through, so that the energy consumption due to beam measurements is further reduced.

It should be noted that the details of the method are described in detail in the first embodiment and the second embodiment, and are not repeated here.

The technology of the present disclosure is applicable to various products.

The electronic apparatus 100 may be implemented as various user equipment. The user equipment may be implemented as a mobile terminal (such as a smartphone, a tablet personal computer (PC), a notebook PC, a portable game terminal, a portable/dongle-type mobile router, and a digital camera), or an in-vehicle terminal (such as a car navigation device). The user equipment may also be implemented as a terminal that performs machine-to-machine (M2M) communication (which is also referred to as a machine type communication (MTC) terminal). Furthermore, the user equipment may be a wireless communication module (such as an integrated circuit module including a single wafer) mounted on each of the above-mentioned terminals.

For example, the electronic apparatus 200 may be implemented as various base stations. The base station may be implemented as any type of evolved Node B (eNB) or gNB (5G base station). The eNB includes, for example, a macro eNB and a small eNB. The small eNB may be an eNB of a cell with coverage smaller than that of a macro cell, such as a pico-eNB, a micro-eNB and a household (femto) eNB. The similar situation may also apply for a gNB. Alternatively, the base station may be implemented as any other type of base stations, such as a NodeB and a base transceiver station (BTS). The base station may include a main body (also referred to as a base station device) configured to control wireless communications, and one or more remote radio heads (RRH) arranged in a different place from the main body. In addition, various types of user equipment may each serve as a base station by performing functions of the base station temporarily or semi-permanently.

### [Application Examples Regarding a Base Station]

### (First Embodiment)

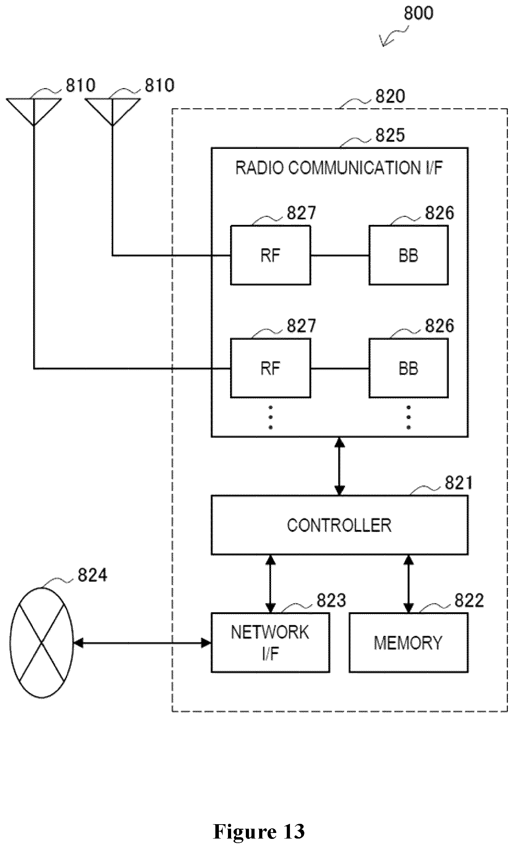

Figure 13 is a block diagram showing a first example of a schematic configuration of an eNB or gNB to which the technology of the present disclosure may be applied. It should be noted that the following description is given by taking the eNB as an example, which is also applicable to the gNB. An eNB 800 includes one or more antennas 810 and a base station apparatus 820. The base station apparatus 820 and each of the antennas 810 may be connected to each other via a radio frequency (RF) cable.

Each of the antennas 810 includes a single or multiple antennal elements (such as multiple antenna elements included in a multiple-input multiple-output (MIMO) antenna), and is used for the base station apparatus 820 to transmit and receive wireless signals. As shown in Figure 13, the eNB 800 may include the multiple antennas 810. For example, the multiple antennas 810 may be compatible with multiple frequency bands used by the eNB 800. Although Figure 13 shows the example in which the eNB 800 includes the multiple antennas 810, the eNB 800 may include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as resource control, radio bearer control, mobility management, admission control and scheduling. The control may be performed in corporation with an eNB or a core network node in the vicinity. The memory 822 includes a RAM and a ROM, and stores a program executed by the controller 821 and various types of control data (such as a terminal list, transmission power data and scheduling data).

The network interface 823 is a communication interface for connecting the base station apparatus 820 to a core network 824. The controller 821 may communicate with a core network node or another eNB via the network interface 823. In this case, the eNB 800, and the core network node or another eNB may be connected to each other via a logic interface (such as an S1 interface and an X2 interface). The network interface 823 may also be a wired communication interface or a wireless communication interface for wireless backhaul. In a case that the network interface 823 is a wireless communication interface, the network interface 823 may use a higher frequency band for wireless communication than that used by the radio communication interface 825.

The radio communication interface 825 supports any cellular communication scheme (such as Long Term Evolution (LTE) and LTE-advanced), and provides wireless connection to a terminal located in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and perform various types of signal processing of layers (such as L1, Media Access Control (MAC), Radio Link Control (RLC), and a Packet Data Convergence Protocol (PDCP)). The BB processor 826 may have a part or all of the above-described logical functions, to replace the controller 821. The BB processor 826 may be a memory storing communication control programs, or a module including a processor and a related circuit configured to execute the programs. Updating the program may allow the functions of the BB processor 826 to be changed. The module may be a card or a blade inserted into a slot of the base station apparatus 820. Alternatively, the module may be a chip mounted on the card or the blade. Meanwhile, the RF circuit 827 may include, for example, a mixer, a filter, and an amplifier, and transmits and receives wireless signals via the antenna 810.

As shown in Figure 13, the radio communication interface 825 may include multiple

BB processors 826. For example, the multiple BB processors 826 may be compatible with multiple frequency bands used by the eNB 800. The radio communication interface 825 may include multiple RF circuits 827, as shown in Figure 13. For example, the multiple RF circuits 827 may be compatible with multiple antenna elements. Although Figure 13 shows the example in which the radio communication interface 825 includes multiple BB processors 826 and multiple RF circuits 827, the radio communication interface 825 may include a single BB processor 826 and a single RF circuit 827.

In the eNB 800 shown in Figure 13, the communication unit 202 and the transceiver of the electronic apparatus 200 may be implemented by the radio communication interface 825. At least part of the functions may be implemented by the controller 821. For example, the controller 821 may set a timer for UE so that the UE reduces the number of times of reporting beam measurement results during a period when the timer does not elapse, thereby reducing energy consumption of the UE, by performing the functions of the determination unit 201 and the communication unit 202.

### (Second Application Example)

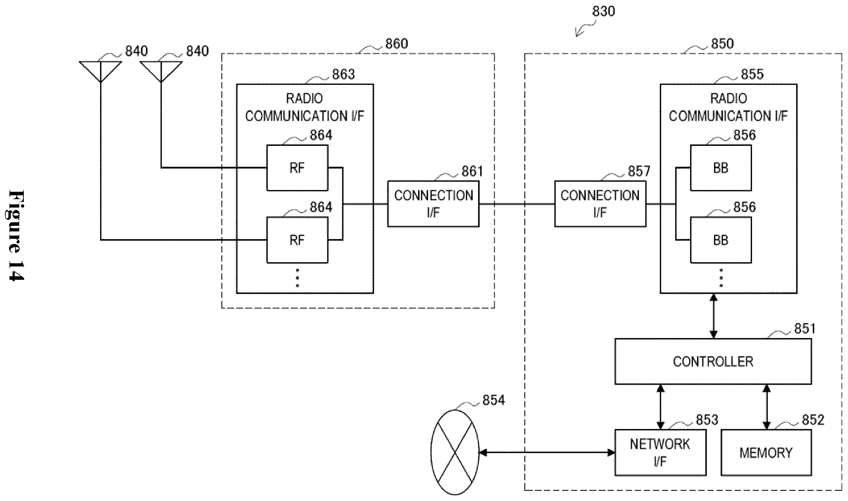

Figure 14 is a block diagram showing a second example of a schematic configuration of an eNB or gNB to which the technology of the present disclosure may be applied. It should be noted that the following description is given by taking the eNB as an example, which is also applied to the gNB. An eNB 830 includes one or more antennas 840, a base station apparatus 850, and an RRH 860. The RRH 860 and each of the antennas 840 may be connected to each other via an RF cable. The base station apparatus 850 and the RRH 860 may be connected to each other via a high speed line such as an optical fiber cable.

Each of the antennas 840 includes a single or multiple antennal elements (such as multiple antenna elements included in an MIMO antenna), and is used for the RRH 860 to transmit and receive wireless signals. As shown in Figure 14, the eNB 830 may include multiple antennas 840. For example, the multiple antennas 840 may be compatible with multiple frequency bands used by the eNB 830. Although Figure 14 shows the example in which the eNB 830 includes multiple antennas 840, the eNB 830 may include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 13.

The radio communication interface 855 supports any cellular communication scheme (such as LTE and LTE-advanced), and provides wireless communication to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 13, except that the BB processor 856 is connected to an RF circuit 864 of the RRH 860 via the connection interface 857. As show in Figure 14, the radio communication interface 855 may include multiple BB processors 856. For example, the multiple BB processors 856 may be compatible with multiple frequency bands used by the eNB 830. Although Figure 14 shows the example in which the radio communication interface 855 includes multiple BB processors 856, the radio communication interface 855 may include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives wireless signals via the antenna 840. The radio communication interface 863 may typically include, for example, an RF circuit 864. The RF circuit 864 may include, for example, a mixer, a filter and an amplifier, and transmits and receives wireless signals via the antenna 840. The radio communication interface 863 may include multiple RF circuits 864, as shown in Figure 14. For example, the multiple RF circuits 864 may support multiple antenna elements. Although Figure 14 shows the example in which the radio communication interface 863 includes multiple RF circuits 864, the radio communication interface 863 may include a single RF circuit 864.

In the eNB 830 shown in Figure 14, the communication unit 202 and the transceiver of the electronic apparatus 200 may be implemented by the radio communication interface 855 and/or the radio communication interface 863. At least part of the functions may be implemented by the controller 851. For example, the controller 851 may set a timer for UE so that the UE reduces the number of times of reporting beam measurement results during a period when the timer does not elapse, thereby reducing energy consumption of the UE, by performing the functions of the determination unit 201 and the communication unit 202.

### [Application Examples Regarding User Equipment]

### (First Application Example)

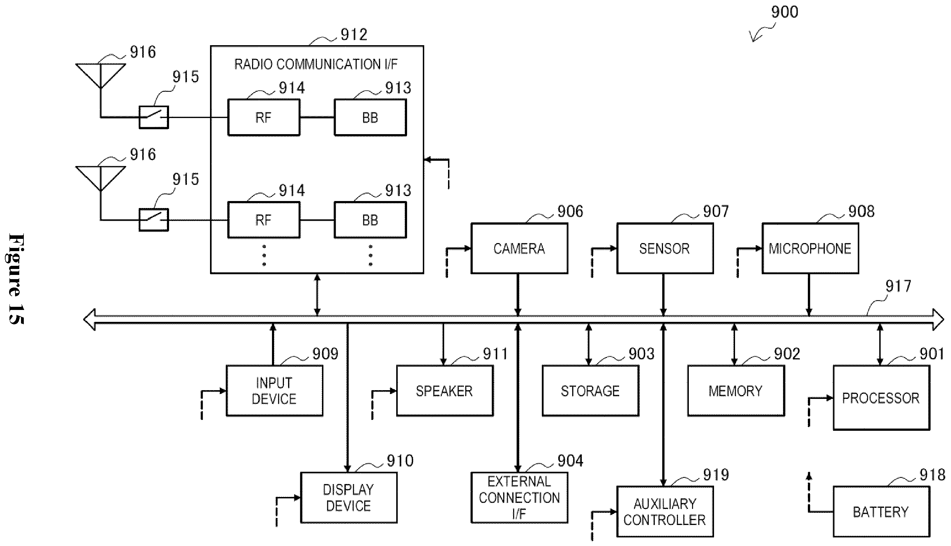

Figure 15 is a block diagram showing an example of a schematic configuration of a smartphone 900 to which the technology of the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes a RAM and a ROM, and stores a program executed by the processor 901 and data. The storage 903 may include a storage medium such as a semiconductor memory and a hard disk. The external connection interface 904 is an interface for connecting an external device (such as a memory card and a universal serial bus (USB) device) to the smartphone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetism sensor, and an acceleration sensor. The microphone 908 converts sounds inputted to the smartphone 900 to audio signals. The input device 909 includes, for example, a touch sensor configured to detect touch onto a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts audio signals outputted from the smartphone 900 to sounds.

The radio communication interface 912 supports any cellular communication scheme (such as LTE and LTE-advanced), and performs wireless communications. The radio communication interface 912 may include, for example, a BB processor 913 and an RF circuit 914. The BB processor 913 may perform, for example, encoding/decoding, modulating/demodulating, and multiplexing/de-multiplexing, and perform various types of signal processing for wireless communication. The RF circuit 914 may include, for example, a mixer, a filter and an amplifier, and transmits and receives wireless signals via the antenna 916. It should be noted that although Figure 15 shows a case that one RF link is connected to one antenna, which is only illustrative, and a situation where one RF link is connected to multiple antennas through multiple phase shifters is also possible. The radio communication interface 912 may be a chip module having the BB processor 913 and the RF circuit 914 integrated thereon. The radio communication interface 912 may include multiple BB processors 913 and multiple RF circuits 914, as shown in Figure 15. Although Figure 15 shows the example in which the radio communication interface 912 includes multiple BB processors 913 and multiple RF circuits 914, the radio communication interface 912 may include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a wireless local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna) and is used for the radio communication interface 912 to transmit and receive wireless signals. The smartphone 900 may include the multiple antennas 916, as shown in Figure 15. Although Figure 15 shows the example in which the smartphone 900 includes multiple antennas 916, the smartphone 900 may include a single antenna 916.

Furthermore, the smartphone 900 may include the antenna 916 for each wireless communication scheme. In this case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smartphone 900 shown in Figure 15 via feeder lines, which are partially shown as dashed lines in Figure 15. The auxiliary controller 919 operates a minimum necessary function of the smartphone 900, for example, in a sleep mode.

In the smartphone 900 shown in Figure 15, the communication unit 103 and the transceiver of the electronic apparatus 100 may be implemented by the radio communication interface 912. At least part of the functions may be implemented by the processor 901 or the auxiliary controller 919. For example, the processor 901 or the auxiliary controller 919 may set a timer so as to reduce the number of times of reporting beam measurement results by the UE during a period when the timer does not elapse, thereby reducing energy consumption of the UE, by performing functions of the setting unit 101, the control unit 102 and the communication unit 103.

### (Second Application Example)

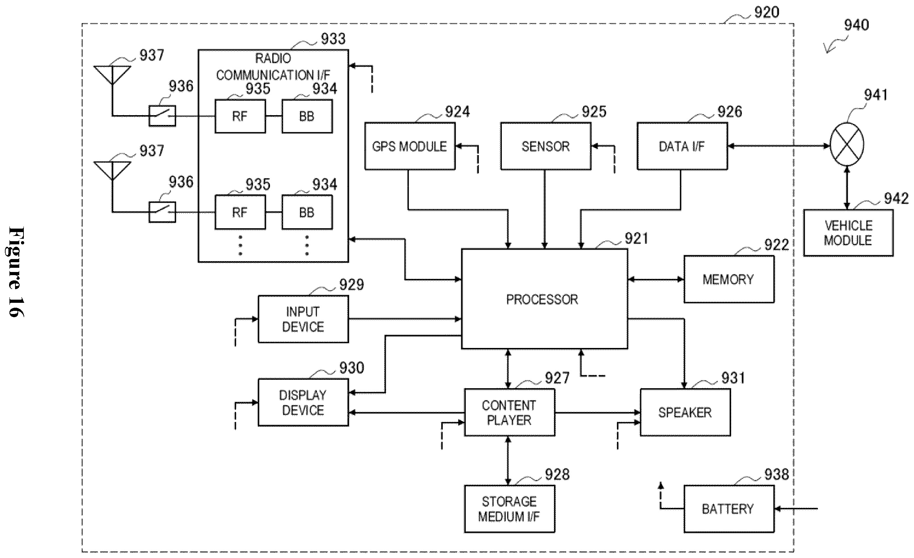

Figure 16 is a block diagram showing an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example a CPU or a SoC, and controls a navigation function and additional function of the car navigation apparatus 920. The memory 922 includes RAM and ROM, and stores a program executed by the processor 921, and data.

The GPS module 924 determines a position (such as latitude, longitude and altitude) of the car navigation apparatus 920 by using GPS signals received from a GPS satellite. The sensor 925 may include a group of sensors such as a gyro sensor, a geomagnetic sensor and an air pressure sensor. The data interface 926 is connected to, for example, an in-vehicle network 941 via a terminal that is not shown, and acquires data (such as vehicle speed data) generated by the vehicle.

The content player 927 reproduces content stored in a storage medium (such as a CD and DVD) that is inserted into the storage medium interface 928. The input device 929 includes, for example, a touch sensor configured to detect touch onto a screen of the display device 930, a button, or a switch, and receives an operation or information inputted from a user. The display device 930 includes a screen such as an LCD or OLED display, and displays an image of the navigation function or reproduced content. The speaker 931 outputs a sound for the navigation function or the reproduced content.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating and multiplexing/demultiplexing, and perform various types of signal processing for wireless communication. The RF circuit 935 may include, for example, a mixer, a filter and an amplifier, and transmits and receives wireless signals via the antenna 937. The radio communication interface 933 may also be a chip module having the BB processor 934 and the RF circuit 935 integrated thereon. The radio communication interface 933 may include multiple BB processors 934 and multiple RF circuits 935, as shown in Figure 16. Although Figure 16 shows the example in which the radio communication interface 933 includes multiple BB processors 934 and multiple RF circuits 935, the radio communication interface 933 may include a single BB processor 934 and a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used for the radio communication interface 933 to transmit and receive wireless signals. As shown in Figure 16, the car navigation apparatus 920 may include multiple antennas 937. Although Figure 16 shows the example in which the car navigation apparatus 920 includes multiple antennas 937, the car navigation apparatus 920 may include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to the blocks of the car navigation apparatus 920 shown in Figure 16 via feeder lines that are partially shown as dash lines in Figure 16. The battery 938 accumulates power supplied from the vehicle.

In the car navigation apparatus 920 shown in Figure 16, the communication unit 103 and the transceiver of the electronic apparatus 100 may be implemented by the radio communication interface 933. At least part of the functions may be implemented by the processor 921. For example, the processor 921 may set a timer so as to reduce the number of times of reporting beam measurement results by the UE during a period when the timer does not elapse, thereby reducing energy consumption of the UE, by performing functions of the setting unit 101, the control unit 102 and the communication unit 103.

The technology according to the present disclosure may also be implemented as an in-vehicle system (or a vehicle) 940 including one or more blocks of the car navigation device 920, the in-vehicle network 941, and a vehicle module 942. The vehicle module 942 generates vehicle data (such as vehicle speed, engine speed, and failure information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

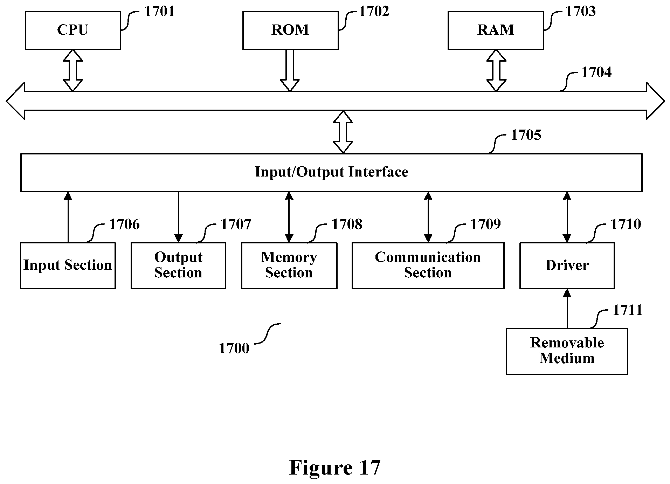

In the case where the present disclosure is realized with software or firmware, a program constituting the software is installed in a computer with a dedicated hardware structure (e.g. the general computer 1700 shown in Figure 17) from a storage medium or network, wherein the computer is capable of implementing various functions when installed with various programs.

In Figure 17, a central processing unit (CPU) 1701 executes various processing according to a program stored in a read-only memory (ROM) 1702 or a program loaded to a random access memory (RAM) 1703 from a memory section 1708. The data needed for the various processing of the CPU 1701 may be stored in the RAM 1703 as needed. The CPU 1701, the ROM 1702 and the RAM 1703 are linked with each other via a bus 1704. An input/output interface 1705 is also linked to the bus 1704.

The following components are linked to the input/output interface 1705: an input section 1706 (including keyboard, mouse and the like), an output section 1707 (including displays such as a cathode ray tube (CRT), a liquid crystal display (LCD), a loudspeaker and the like), a memory section 1708 (including hard disc and the like), and a communication section 1709 (including a network interface card such as a LAN card, modem and the like). The communication section 1709 performs communication processing via a network such as the Internet. A driver 1710 may also be linked to the input/output interface 1705, if needed. If needed, a removable medium 1711, for example, a magnetic disc, an optical disc, a magnetic optical disc, a semiconductor memory and the like, may be installed in the driver 1710, so that the computer program read therefrom is installed in the memory section 1708 as appropriate.

In the case where the foregoing series of processing is achieved through software, programs forming the software are installed from a network such as the Internet or a memory medium such as the removable medium 1711.

It should be appreciated by those skilled in the art that the memory medium is not limited to the removable medium 1711 shown in Figure 17, which has program stored therein and is distributed separately from the apparatus so as to provide the programs to users. The removable medium 1711 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 1702 and the memory section 1708 in which programs are stored, and can be distributed to users along with the device in which they are incorporated.

To be further noted, in the apparatus, method and system according to the present disclosure, the respective components or steps can be decomposed and/or recombined. These decompositions and/or re-combinations shall be regarded as equivalent solutions of the disclosure. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ......" in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1. An electronic apparatus for wireless communications, comprising:
processing circuitry, configured to:
set a timer, which is used for timing a time period since user equipment accesses into a first cell of a Non-Terrestrial Network (NTN), and a timing duration of which is set based on a pre-estimated service time duration of the first cell for the user equipment; and
reduce the number of times of reporting beam measurement results during a period when the timer does not elapse, compared with reporting of the beam measurement results performed after the timer elapses.

2. The electronic apparatus according to claim 1, wherein, the processing circuitry is further configured to measure only one or more beams corresponding to the first cell during the period when the timer does not elapse.

3. The electronic apparatus according to claim 2, wherein, the processing circuitry is configured to: reduce the number of times of beam measurements during the period when the timer does not elapse, compared with the beam measurements performed after the timer elapses.

4. The electronic apparatus according to claim 2, wherein, the processing circuitry is configured to: interrupt timing of the timer and trigger a cell handover process in a case that a measured beam quality of the first cell is lower than a predetermined threshold.

5. The electronic apparatus according to claim 1, wherein, the processing circuitry is configured not to perform reporting of the beam measurement results during the period when the timer does not elapse.

6. The electronic apparatus according to claim 1, wherein, the processing circuitry is further configured to receive, from a base station of the first cell, radio resource control reconfiguration message comprising information of the timing duration of the timer.

7. The electronic apparatus according to claim 6, wherein the processing circuitry is configured to deactivate the timer in a case that the radio resource control reconfiguration message does not comprise the information of the timing duration of the timer.

8. The electronic apparatus according to claim 1, wherein the processing circuitry is further configured to perform a cell handover operation after the timer elapses.

9. The electronic apparatus according to claim 8, wherein the processing circuitry is configured not to perform measurement on a beam corresponding to a cell which the user equipment already passed through when performing the cell handover operation.

10. The electronic apparatus according to claim 8, wherein the processing circuitry is configured to comprise location information of the user equipment in a beam measurement report to provide to a base station.

11. The electronic apparatus according to claim 10, wherein the processing circuitry is further configured to hand over to a target cell based on an instruction from the base station, the target cell being one of candidate cells measured by the user equipment which enables the user equipment to work normally and provides a longest pre-estimated service time duration.

12. The electronic apparatus according to claim 11, wherein the target cell is determined by the base station based at least on location information of the user equipment, satellite ephemeris information, a satellite movement direction and speed, a beam elevation, and a cell coverage area.

13. An electronic apparatus for wireless communications, comprising:
processing circuitry, configured to:
determine, based on a pre-estimated service time duration of a first cell of a Non-Terrestrial Network (NTN) into which user equipment is to access for the user equipment, a timing duration of a timer for the user equipment; and
provide information of the timing duration to the user equipment, so that the user equipment uses the timer for timing a time period since the user equipment accesses into the first cell, wherein, the user equipment reduces the number of times of reporting beam measurement results during a period when the timer does not elapse, compared with reporting of the beam measurement results performed after the timer elapses.

14. The electronic apparatus according to claim 13, wherein the processing circuitry is configured to comprise the information of the timing duration in a radio resource control reconfiguration message and provide to the user equipment.

15. The electronic apparatus according to claim 14, wherein the processing circuitry is further configured to instruct the user equipment to deactivate the timer by not comprising the information of the timing duration in the radio resource control reconfiguration message.

16. The electronic apparatus according to claim 13, wherein the processing circuitry is further configured to determine, based on location information of the user equipment, satellite ephemeris information, a satellite movement direction and speed, a beam elevation, and a cell coverage area, a pre-estimated service time duration in which respective candidate cells can serve the user equipment.

17. The electronic apparatus according to claim 16, wherein the processing circuitry is configured to acquire the location information of the user equipment via a beam measurement report of the user equipment.

18. The electronic apparatus according to claim 16, wherein, the processing circuitry is further configured to acquire the beam measurement results of the user equipment, and determine, based on the beam measurement results and the determined pre-estimated service time duration of respective candidate cells, that the user equipment is to hand over to the first cell.

19. The electronic apparatus according to claim 18, wherein the first cell is one of the candidate cells which enables the user equipment to work normally and provides a longest pre-estimated service time duration.

20. The electronic apparatus according to claim 18, wherein the processing circuitry is configured to determine a cell that the user equipment already passed through based on a movement direction of a satellite, and configure the user equipment not to perform measurement on a beam corresponding to the cell that the user equipment already passed through.

21. The electronic apparatus according to claim 13, wherein the user equipment does not perform reporting of the beam measurement results during the period when the timer does not elapse.

22. The electronic apparatus according to claim 13, wherein, the user equipment measures only one or more beams corresponding to the first cell during the period when the timer does not elapse.

23. A method for wireless communications, comprising:
setting a timer, which is used for timing a time period since user equipment accesses into a first cell of a Non-Terrestrial Network (NTN), and a timing duration of which is set based on a pre-estimated service time duration of the first cell for the user equipment; and
reducing the number of times of reporting beam measurement results during a period when the timer does not elapse, compared with reporting of the beam measurement results performed after the timer elapses.

24. A method for wireless communications, comprising:
determining, based on a pre-estimated service time duration of a first cell of a Non-Terrestrial Network (NTN) into which user equipment is to access for the user equipment, a timing duration of a timer for the user equipment; and
providing information of the timing duration to the user equipment, so that the user equipment uses the timer for timing a time period since the user equipment accesses into the first cell, wherein, the user equipment reduces the number of times of reporting beam measurement results during a period when the timer does not elapse, compared with reporting of the beam measurement results performed after the timer elapses.

25. A computer-readable storage medium having computer-executable instructions stored thereon, which when executed by one or more processors, cause the one or more processors to perform the method for wireless communications according to claim 23 or 24.
